# EUROPÄISCHE PATENTSCHRIFT

(11) **EP 2 583 601 B1**
(45) Veröffentlichungstag und Bekanntmachung des Hinweises auf die Patenterteilung: **10.12.2014**
(21) Anmeldenummer: 12188045.4
(22) Anmeldetag: 10.10.2012
(51) Int. Cl.: A47J 41/00

(54) **Verschlussvorrichtung zum Verschließen eines Gefäßes**
Closing device for closing a vessel
Dispositif de fermeture pour la fermeture d'un récipient

(30) Priorität: 21.10.2011 DE 102011084997
(43) Veröffentlichungstag der Anmeldung: 24.04.2013
(73) Patentinhaber: WMF WÜRTTEMBERGISCHE METALLWARENFABRIK AG, 73309 Geislingen/Steige (DE)
(72) Erfinder: Abele, Werner, 89558 Böhmenkirch (DE); Dehnke, Frank, 74399 Walheim (DE)
(74) Vertreter: BRP Renaud & Partner mbB Rechtsanwälte Patentanwälte Steuerberater

(56) Entgegenhaltungen:
- EP-A1- 0 894 463
- DE-U1- 20 310 266

## Beschreibung

Die vorliegende Erfindung betrifft eine Verschlussvorrichtung zum Verschließen eines Gefäßes, insbesondere eines Flüssigkeits-Behälters, umfassend ein Verschlusselement und eine eine Öffnung aufweisende Aufnahmevorrichtung gemäß dem Oberbegriff des Anspruchs 1. Die Erfindung betrifft außerdem ein Gefäß mit einer derartigen Verschlussvorrichtung.

Aus dem Stand der Technik sind z.B. aus dem Dokument EP 0 894 463 Verschlussvorrichtungen bekannt, mit deren Hilfe eine Öffnung eines Gefäßes mit Flüssigkeit, je nach Bedarf geöffnet oder verschlossen werden kann. Eine solche Verschlussvorrichtung umfasst üblicherweise ein Verschlusselement, welches in Gebrauchslage in eine geeignete, eine Öffnung umfassende Aufnahmevorrichtung aufgenommen ist, so dass ein mit der Aufnahmevorrichtung verbundenes Gefäß (beispielsweise eine Thermoskanne o.ä.) mittels der Verschlussvorrichtung verschlossen und bei Bedarf, beispielsweise zur Entnahme einer in dem Gefäß befindlichen Flüssigkeit oder zum Befüllen des Gefäßes mit Flüssigkeit, wieder geöffnet werden kann. Dazu wird das Verschlusselement von einer Position, in der die Öffnung der Aufnahmevorrichtung (und damit das Behältnis selbst) verschlossen ist, in eine Position bewegt, in der die Öffnung der Aufnahmevorrichtung geöffnet ist, und umgekehrt.

Aus dem Stand der Technik bekannte Verschlussvorrichtungen weisen jedoch den Nachteil auf, dass es häufig mit hohem Aufwand verbunden ist, das Verschlusselement aus der Aufnahmevorrichtung zu entfernen, beispielsweise um das mit der Aufnahmevorrichtung verbundene Gefäß mit Flüssigkeit zu befüllen, oder um das Behältnis und/oder das Verschlusselement zu reinigen. Bei bekannten Verschlussvorrichtungen erfordert ein derartiges Entfernen des Verschlusselements beispielsweise ein relativ aufwändiges Abschrauben des Verschlusselements von der Aufnahmevorrichtung. Aus dem Stand der Technik bekannte Verschlussvorrichtungen sind häufig auch derart realisiert, dass ein Entfernen des Verschlusselements von der Aufnahmevorrichtung überhaupt nicht möglich ist, was ein effektives Befüllen oder ein Reinigen erschwert.

Die vorliegende Erfindung beschäftigt sich mit dem Problem, eine Verschlussvorrichtung bereitzustellen, bei der die zuvor genannten Nachteile behoben sind. Insbesondere ist es eine Aufgabe der vorliegenden Erfindung, eine Verschlussvorrichtung zum Verschließen und Öffnen eines Gefäßes bereitzustellen, bei dem ein Verschlusselement auf einfache Art und Weise aus einer zugehörigen Aufnahmevorrichtung entfernt werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Verschlussvorrichtung eine Kulissenführung einzusetzen, über welche ein Verschlusselement relativ zu einer zugehörigen Aufnahmevorrichtung bewegbar, insbesondere schwenkbar, ist, wobei am Verschlusselement Kulissennuten und an der Aufnahmevorrichtung zugehörige Kulissensteine angeordnet sind, oder umgekehrt, und wobei die Kulissensteine in Richtung der zugehörigen Kulissennuten vorgespannt sind, so dass das Verschlusselement in der Aufnahmevorrichtung gehalten und durch ein Zurückdrücken der Kulissensteine aus dieser entnehmbar ist. Das Verschlusselement und die Aufnahmevorrichtung bilden dabei zusammen die Verschlussvorrichtung. Durch die Verwendung der erfindungsgemäßen Kulissenführung mit Kulissennuten und Kulissensteinen ist es möglich, das Verschlusselement in der Aufnahmevorrichtung beweglich zu lagern. Dies erlaubt für das Verschlusselement ein Einstellen von verschiedenen Positionen bzgl. der Aufnahmevorrichtung. Insbesondere kann durch eine entsprechende Geometrie von Verschlusselement und Aufnahmevorrichtung bewirkt werden, dass sich der Öffnungsgrad der Öffnung in Abhängigkeit von der Position des Verschlusselements relativ zu der Aufnahmevorrichtung ändert. Gleichzeitig wird durch die Anordnung von Kulissensteinen an der Aufnahmevorrichtung, die in Richtung von auf dem Verschlusselement angebrachten Kulissennuten vorgespannt sind, sichergestellt, dass das Verschlusselement in Gebrauchslage auch beim oben beschriebenen Verstellen des Verschlusselements relativ zur Aufnahmevorrichtung in einem in der Aufnahmevorrichtung aufgenommenen Zustand verbleibt, während das Verschlusselement durch ein Zurückdrücken der Kulissensteine auf einfache Weise aus der Aufnahmevorrichtung entfernt werden kann. Dies erleichtert beispielsweise das Befüllen eines mit der Aufnahmevorrichtung verbundenen Gefäßes, da bei entferntem Verschlusselement über den gesamten Öffnungsquerschnitt der Öffnung der Aufnahmevorrichtung befüllt werden kann. Auch erleichtert eine vollständige Entnahme des Verschlusselements eine etwaige Reinigung von Aufnahmevorrichtung und/oder Verschlusselement.

In einer bevorzugten Ausführungsform ist das Verschlusselement zwischen einer ersten Position, in der die Öffnung verschlossen ist, und einer zweiten Position, in der die Öffnung wenigstens teilweise geöffnet ist, verstellbar. Auf diese Weise ist ein einfaches Bewegen des Verschlusselements von einem geöffneten Zustand in einen mediumdicht verschlossenen Zustand möglich. Ein unerwünschter Austritt von Flüssigkeit o.ä. aus einem mit der Aufnahmevorrichtung verbundenen Gefäß kann somit durch ein Schwenken, des Verschlusselements in die erste Position verhindert werden. Durch ein Bewegen, insbesondere Schwenken, des Verschlusselements in die zweite Position kann Flüssigkeit aus dem Gefäß entnommen werden. Auch ist es in dieser Position möglich, das Gefäß mit Flüssigkeit zu befüllen. Mittels Verwendung von zwei eindeutig festgelegten Positionen, die einen geöffneten bzw. geschlossenen Zustand der Öffnung der Aufnahmevorrichtung eindeutig festlegen, wird für einen Benutzer der Verschlussvorrichtung auch auf einfache Weise ersichtlich, ob die Öffnung der Aufnahmevorrichtung geöffnet oder verschlossen ist. Die Wahrscheinlichkeit von Fehlbedienungen der Verschlussvorrichtung, beispielsweise in Form eines versehentlichen Öffnens der Verschlussvorrichtung und ein damit verbundenes ungewolltes Austreten von Flüssigkeit aus dem Gefäß, wird auf diese Weise verringert.

In einer weiterbildenden Ausführungsform kann daran gedacht sein, dass das Zurückdrücken der Kulissensteine zur Entnahme des Verschlusselements aus der Aufnahmevorrichtung durch ein Bewegen, insbesondere ein Schwenken, des Verschlusselements in eine dritte Position erfolgt. Auf diese Weise kann das Entnehmen des Verschlusselements aus der Aufnahmevorrichtung durch einen Benutzer auf besonders einfache Art und Weise erfolgen. Insbesondere kann daran gedacht sein, dass das Bewegen in die dritte Position als eine Fortsetzung der Bewegung von der ersten in die zweite Position erfolgt.

Ebenfalls in einer weiterbildenden Ausführungsform kann vorgesehen sein, dass die Verschlussvorrichtung derart ausgebildet ist, dass das Verschlusselement bei fehlender äußerer Einwirkung durch einen Benutzer in der ersten und/oder zweiten Position verbleibt. Beispielsweise kann dies durch einen geeigneten Rastmechanismus realisiert sein. Auf diese Weise wird ein unerwünschtes Verstellen des Verschlusselements, insbesondere ein unerwünschtes Öffnen der Öffnung der Aufnahmevorrichtung, vermieden. Selbstverständlich können auch weitere Zwischenpositionen über einen derartigen Rastmechanismus einstellbar sein.

Des Weiteren kann daran gedacht sein, dass die Kulissensteine mittels einer Feder, insbesondere mittels eines Spannrings, in die zugehörigen Kulissennuten vorgespannt sind. Dies ermöglicht eine technisch besonders einfache und damit kostengünstige Realisierung der erfindungsgemäßen Verschlussvorrichtung.

Eine solche Realisierung des Vorspannmechanismus ist auch besonders wartungsfreundlich, da die Kulissensteine besonders einfach, beispielsweise zu Reinigungszwecken, ausgetauscht werden können.

Bevorzugt ist das Verschlusselement kugelsegmentartig ausgebildet und weist auf einer gekrümmt ausgebildeten Oberfläche zwei Kulissennuten auf. Eine derartige Ausgestaltung des Verschlusselements erleichtert die Bewegung, insbesondere das Schwenken des Verschlusselements relativ zur Aufnahmevorrichtung. In einer bevorzugten Ausführungsform besitzen die Kulissennuten eine gekrümmte Form, insbesondere die Form eines Kreisbogens. Eine derartige Ausgestaltung bietet sich dann an, wenn das Verschlusselement relativ zur Aufnahmevorrichtung schwenkbar angeordnet sein soll, da eine gekrümmte, insbesondere kreisbogenartige Form der Kulissennuten eine einfache Schwenkbewegung des Verschlusselements relativ zur Aufnahmevorrichtung unterstützt. In alternativen Ausführungsformen können die Kulissennuten aber auch beliebige andere Formen besitzen, beispielsweise eine einfache geradlinige Form, wenn die Bewegung des Verschlusselements in Form einer Translationsbewegung erfolgen soll. Entsprechendes gilt für die Kulissensteine.

Um die Bewegung des Verschlusselements relativ zur Aufnahmevorrichtung weiter zu verbessern, kann die Aufnahmevorrichtung eine zur gekrümmt ausgebildeten Oberfläche des Verschlusselements komplementäre Negativform zur Aufnahme des Verschlusselements aufweisen.

Vorteilhafterweise weisen die Kulissensteine wenigstens eine erste Seite mit einer ersten Anlaufschräge und wenigstens eine zweite Seite mit einer zweiten Anlaufschräge auf. Mittels der ersten Anlaufschräge wird die Durchführung einer Schwenkbewegung des Verschlusselements erleichtert, wenn das Verschlusselement durch Zurückdrücken der Kulissensteine aus der Aufnahmevorrichtung entnommen werden soll. Mittels der zweiten Anlaufschräge wird das Zurückdrücken der vorgespannten Kulissensteine erleichtert, wenn das Verschlusselement in der Aufnahmevorrichtung aufgenommen werden soll.

Bevorzugt umfasst die Aufnahmevorrichtung einen Ausgießer zum Ausgießen eines durch die Öffnung der Aufnahmevorrichtung durchtretenden Mediums, insbesondere einer Flüssigkeit. Auf diese Weise kann die Aufnahmevorrichtung nicht nur zur Aufnahme des Verschlusselements verwendet werden, sondern gleichzeitig als Vorrichtung zum gezielten Ausgießen des durch die Öffnung durchtretenden Mediums verwendet werden.

Die Erfindung betrifft ferner ein Gefäß zur Aufnahme insbesondere einer Flüssigkeit sowie eine mit diesem Gefäß verbindbare oder verbundene Verschlussvorrichtung mit einem oder mehreren der oben beschriebenen Merkmale. Um zu verhindern, dass sich die Temperatur einer in dem Gefäß befindlichen Flüssigkeit, aufgrund von Umgebungseinflüssen schnell ändern kann, kann das Gefäß in einer weiterbildenden Ausführungsform als Thermoskanne ausgebildet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: ein erstes Ausführungsbeispiel einer erfindungsgemäßen Verschlussvorrichtung in einem Zustand, in dem das Verschlusselement nicht in der Aufnahmevorrichtung aufgenommen ist,
- Fig. 1b,c: Längsschnittansichten der perspektivischen Ansicht der Fig. 1 a,
- Fig. 2a-c: eine Seitenansicht, eine Vorderansicht und eine Draufsicht eines erfindungsgemäßen Verschlusselements gemäß dem ersten Ausführungsbeispiel,
- Fig. 3a,b: eine Schnittdarstellung bzw. Draufsicht einer erfindungsgemäßen Aufnahmevorrichtung,
- Fig. 4a,b: eine perspektivische Ansicht eines erfindungsgemäßen Kulissensteins und einer zugehörigen Kulissennut,
- Fig. 5a: die erfindungsgemäße Verschlussvorrichtung bei in der Aufnahmevorrichtung aufgenommenem Verschlusselement und in geschlossenem Zustand,
- Fig. 5b,c: verschiedene Längsschnittansichten der perspektivischen Ansicht der Fig. 5a,
- Fig. 6a: die erfindungsgemäße Verschlussvorrichtung bei teilweise geöffnetem Verschlusselement,
- Fig. 6b,c: verschiedene Längsschnittansichten der perspektivischen Ansicht der Fig. 6a,
- Fig. 7a: die Verschlussvorrichtung in einem Zustand, in dem das Verschlusselement in der Aufnahmevorrichtung aufgenommen ist und aus der Position, in der die Öffnung der Aufnahmevorrichtung wenigstens teilweise geöffnet ist, in eine Position, in der die Kulissensteine zur Entnahme des Verschlusselements aus der Aufnahmevorrichtung zurückgedrängt werden, geschwenkt wird,
- Fig. 7b,c: verschiedene Längsschnittansichten der perspektivischen Ansicht der Fig. 7a,
- Fig. 8a: die erfindungsgemäße Verschlussvorrichtung nach Entnahme des Verschlusselements aus der Aufnahmevorrichtung,
- Fig. 8b,c: verschiedene Längsschnittansichten der perspektivischen Ansicht der Fig. 8a.

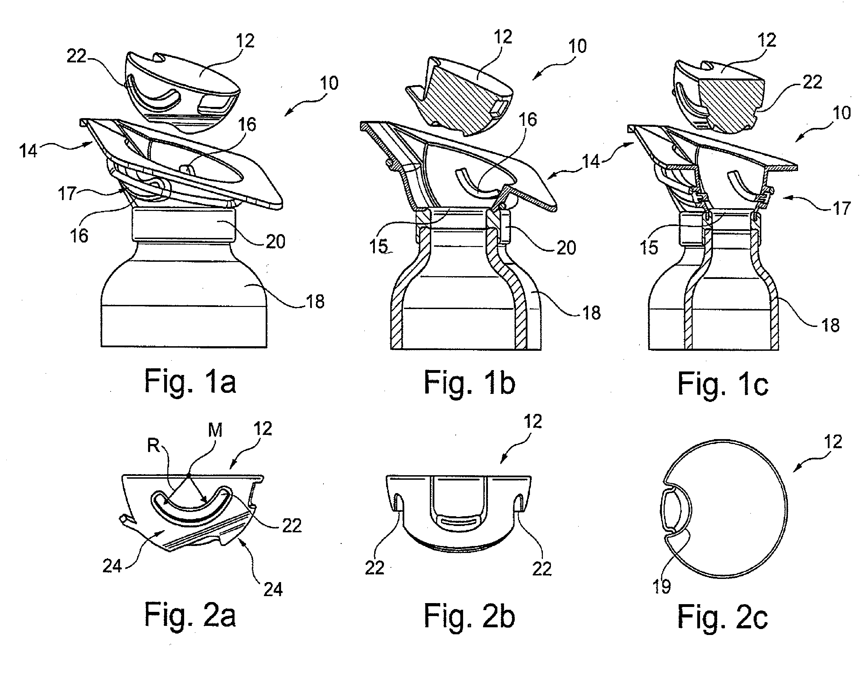

In der Fig. 1a ist eine erfindungsgemäße Verschlussvorrichtung mit 10 bezeichnet, die Fig. 1b und 1c zeigen jeweils Längsschnitte der perspektivischen Ansicht der Fig. 1a. Die Verschlussvorrichtung 10 umfasst ein kugelsegmentartig ausgebildetes Verschlusselement 12 mit einer gekrümmt ausgebildeten Oberfläche und eine Aufnahmevorrichtung 14 mit einer zur gekrümmt ausgebildeten Oberfläche des Verschlusselements 12 komplementären Negativform. In Varianten zum ersten Ausführungsbeispiel sind sowohl für das Verschlusselement 12 als auch für die Aufnahmevorrichtung 14 andere als die in Fig.1a bis 1c gezeigten Geometrien vorstellbar.

Die Aufnahmevorrichtung 14 weist eine Öffnung 15 für den Durchfluss einer Flüssigkeit oder eines anderen Mediums auf. Die Verschlussvorrichtung 10 ist mit einem nicht zur Verschlussvorrichtung 10 gehörenden Gefäß 18 mittels einer Dichtungseinrichtung 20 verbunden. In einer Variante können alternativ oder zusätzlich zur Dichtungseinrichtung 20 auch andere Vorrichtungen zur Verbindung von Verschlussvorrichtung 10 mit dem Gefäß 18 verwendet werden. In einem weiteren alternativen Ausführungsbeispiel kann eine erfindungsgemäße Verschlussvorrichtung 10 auch mit dem Gefäß 18 zu einer Einheit verbunden sein.

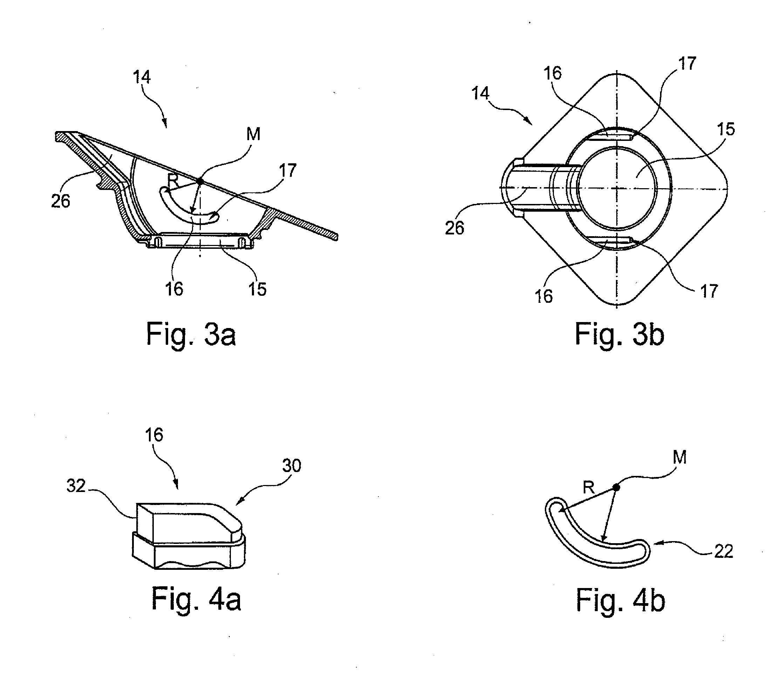

Die erfindungsgemäße Verschlussvorrichtung 10 umfasst zwei Kulissensteine 16, die in der Fig. 4a vergrößert dargestellt sind und die in zugehörigen und in diesem Fall am Verschlusselement 12 angeordneten Kulissennuten 22 geführt sind. Die Kulissensteine 16 sind dabei in Längsrichtung innerhalb der Kulissennuten 22 verstellbar, bzw. die Kulissennuten 22 am Verschlusselement 12 sind über die Kulissensteine 16 der Aufnahmevorrichtung 14 verschiebbar. In den Fig. 2a bis 2c ist das Verschlusselement 12 in vergrößerter Ansicht dargestellt. Das Verschlusselement 12 weist zwei Kulissennuten 22 (vgl. Fig. 1 c) auf, die die Form eines Kreisbogens mit Radius R um einen virtuellen Mittelpunkt M bilden. Das Verschlusselement 12 weist zudem eine Aussparung 19 (vgl. Fig. 2c) zur Betätigung des Verschlusselements 12 und eine Dichtungsfläche 24 auf, die die Öffnung 15 der Aufnahmevorrichtung 14 in einem geschlossenen Zustand mediumdicht abdichtet. Selbstverständlich können die Kulissensteine 16 auch am Verschlusselement 12 und die Kulissennutzen 22 an der Aufnahmevorrichtung 14 angeordnet sein.

Ein Einsetzen des Verschlusselements 12 in die Aufnahmevorrichtung 14 kann dabei durch ein einfaches Eindrücken erfolgen, bei dem die federvorgespannten Kulissensteine 16 zunächst durch das Verschlusselement 12 weggedrückt werden, bis sie in die Kulissennuten 22 eintauchen. In diesem Zustand ist das Verschlusselement 12 an der Aufnahmevorrichtung 14 gehalten.

In der Fig. 3a und 3b ist die Aufnahmevorrichtung 14 in einer LängsschnittAnsicht bzw. in Draufsicht dargestellt. Die Aufnahmevorrichtung 14 ist in Form eines negativen Kugelsegments ausgebildet, so dass sie das Verschlusselement 12 aufnehmen kann. Die Kulissensteine 16 bilden zusammen mit den zugehörigen Kulissennuten 22 jeweils eine Kulissenführungen 17. Die Aufnahmevorrichtung 14 umfasst ferner einen Ausgießer 26 zum Ausgießen eines durch die Öffnung 15 der Aufnahmevorrichtung 14 hindurchtretenden Mediums.

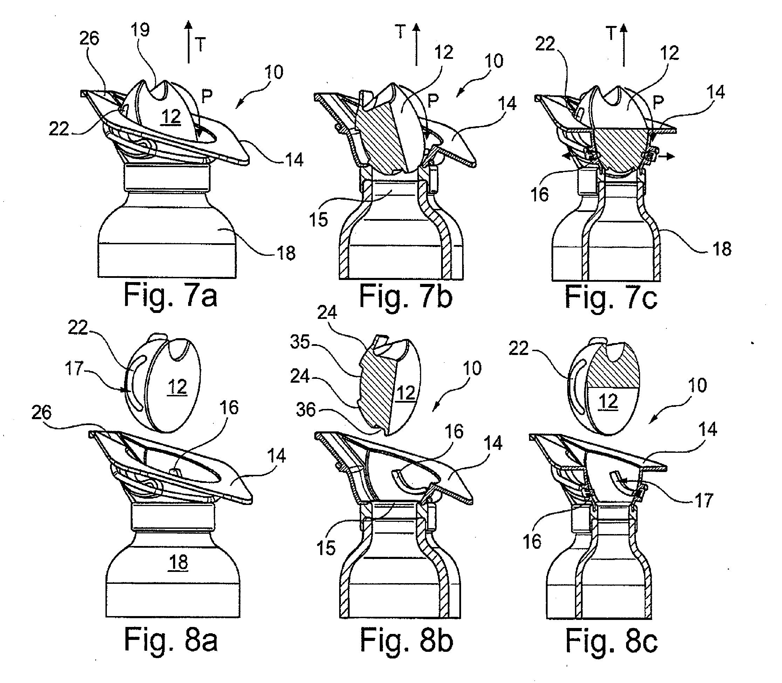

In der Fig. 4a ist ein erfindungsgemäßer Kulissenstein 16 in perspektivischer Ansicht bzw. in einer Seitenansicht gezeigt. Der Kulissenstein 16 weist auf einer ersten Seite eine Anlaufschräge 30 auf. Mittels dieser Anlaufschräge 30 wird die Durchführung einer Schwenkbewegung des Verschlusselements 12 erleichtert, wenn das Verschlusselement 12 durch Zurückdrängen der Kulissensteine 16 aus der Aufnahmevorrichtung 14 entnommen werden soll. Das Zurückdrängen der Kulissensteine 16 erfolgt dabei durch ein Weiterverdrehen über den geöffneten Zustand hinaus, wie dies beispielsweise in den Fig. 7a-c dargestellt ist. Auf der der Anlaufschräge gegenüberliegenden Seite besitzt das Verschlusselement 12 einen Anschlag 32 (vgl. Fig. 4a), der die Schwenkbewegung des Verschlusselements 12 begrenzt.

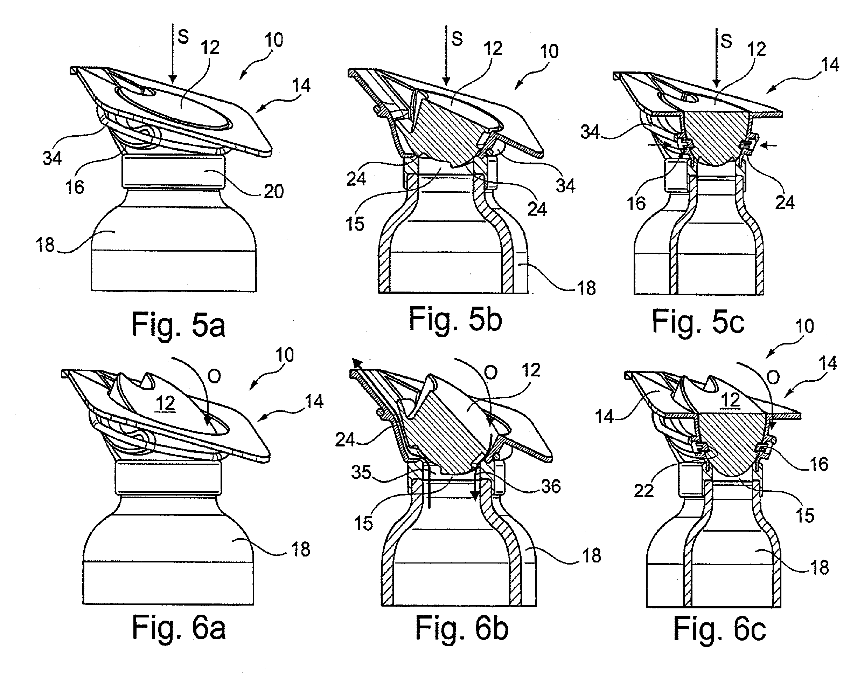

In den im Folgenden beschriebenen Figuren 5 bis 8 ist die erfindungsgemäße Verschlussvorrichtung 10 in verschiedenen Funktionslagen dargestellt:

Die Fig. 5a bis 5c zeigen die erfindungsgemäße Verschlussvorrichtung 10 in einem geschlossenen Zustand, d.h. das Verschlusselement 12 ist in der Aufnahmevorrichtung 14 aufgenommen und in einer ersten Position angeordnet, in der die Öffnung 15 der Aufnahmevorrichtung 14 mittels der Dichtungsfläche 24 verschlossen ist. In den Kulissenführungen 17 der Aufnahmevorrichtung 14 sind zwei Kulissensteine 16 angeordnet, die in Richtung der Kulissennuten 22 des Verschlusselements 12 mittels eines Spannrings 34 radial nach innen vorgespannt sind. Die Kulissensteine 16 tauchen somit in die zugehörigen Kulissennuten 22 ein. Beim Einschieben des Verschlusselements 12 in die Aufnahmevorrichtung 14 in Richtung S werden die Kulissensteine 16 der Kulissenführung 17 von der gekrümmten Oberfläche des Verschlusselements 12 zunächst entgegen der durch den Spannring 34 erzeugten Vorspannkraft radial nach außen gedrückt, bis das Verschlusselement 12 in der Aufnahmevorrichtung 14 eine Position erreicht, in der die Kulissennuten 22 des Verschlusselements 12 mit den Kulissensteinen 16 zur Deckung kommen, so dass die Kulissensteine 16 aufgrund der durch den Spannring 34 erzeugten Vorspannung in die Kulissennuten 22 des Verschlusselements 12 einrasten. In diesem Zustand ist das Verschlusselement 12 schwenkbar gehalten; eine Entnahme des Verschlusselements 12 in einer zu S entgegengesetzten Richtung wird dabei durch die in die Kulissennuten 22 eingreifenden Kulissensteine 16 verhindert.

In den Fig. 6a bis 6c ist ein Schwenken des Verschlusselements 12 in Schwenkrichtung O von der ersten Position in eine zweite Position, in der die Öffnung 15 der Aufnahmevorrichtung 14 geöffnet ist, gezeigt. In dieser Position kann Flüssigkeit aus dem Gefäß 18 entnommen werden, wobei auf der gegenüberliegenden Seite Luft nachströmen kann und dadurch ein schwappfreies Ausgießen ermöglicht wird. Über einen Bereich 35 kann dabei die Flüssigkeit aus dem Gefäß 18 abfließen, wobei gleichzeitig durch einen Bereich 36 Luft in das Gefäß 18 nachströmen (s. Fig. 6b) kann. Die Schwenkbewegung des Verschlusselements 12 erfolgt um den virtuellen Mittelpunkt M (in den Fig. 6a bis 6c nicht gezeigt), wobei während der Schwenkbewegung die Kulissensteine 16 in den Kulissennuten 22 gleiten. Da die Kulissensteine 16 während der gesamten Schwenkbewegung von der ersten in die zweite Position in die Kulissennuten 22 eingerastet sind, kann das Verschlusselement 12 während des Schwenkvorgangs nicht aus der Aufnahmevorrichtung 14 entnommen werden.

In den Fig. 7a bis 7c ist eine Fortsetzung der Schwenkbewegung des Verschlusselements 12, über die bereits erwähnte zweiten Position, in eine dritte Position gezeigt. Beim Weiterschwenken (Richtung P in Fig. 7a bis 7c) gleiten die Kulissensteine 16 aus jeweiligen Endabschnitten der Kulissennuten 22 heraus und werden dabei radial nach außen zurückgedrückt, so dass das Verschlusselement 12 in eine Richtung T aus der Aufnahmevorrichtung 14 entnommen werden kann. Dabei hilft die Anlaufschräge 30.

Die Fig. 8a bis 8c zeigen die Verschlussvorrichtung 10 nach der Entnahme des Verschlusselements 12 aus der Aufnahmevorrichtung 14. Nach der Entnahme des Verschlusselements 12 nehmen die vorgespannten die Kulissensteine 16 wieder ihre Ausgangsposition ein (vgl. Fig. 1a bis 1c).

## Patentansprüche

1. Verschlussvorrichtung (10) zum Verschließen eines Gefäßes (18), insbesondere eines Flüssigkeits-Behälters, umfassend
- ein Verschlusselement (12),
- eine eine Öffnung (15) umfassende Aufnahmevorrichtung (14), die dafür eingerichtet ist, das Verschlusselement (12) zum mediumdichten Verschluss der Öffnung (15) aufzunehmen,
**gekennzeichnet durch**,
eine Kulissenführung (17), über welche das Verschlusselement (12) relativ zur Aufnahmevorrichtung (14) bewegbar, insbesondere schwenkbar, ist, wobei am Verschlusselement (12) Kulissennuten (22) und an der Aufnahmevorrichtung (14) zugehörige Kulissensteine (16) angeordnet sind, oder umgekehrt, und wobei die Kulissensteine (16) in Richtung der zugehörigen Kulissennuten (22) vorgespannt sind, so dass das Verschlusselement (12) in der Aufnahmevorrichtung (14) gehalten und **durch** ein Zurückdrücken der Kulissensteine (16) aus dieser entnehmbar ist.

2. Verschlussvorrichtung nach Anspruch 1,
**dadurch gekennzeichnet,**
**dass** das Verschlusselement (12) zwischen einer ersten Position, in der die Öffnung (15) verschlossen ist, und einer zweiten Position, in der die Öffnung (15) wenigstens teilweise geöffnet ist, verstellbar ist.

3. Verschlussvorrichtung nach Anspruch 1 oder 2,
**dadurch gekennzeichnet,**
**dass** die Kulissensteine (16) mittels einer Feder, insbesondere mittels eines Spannrings (34), in die zugehörigen Kulissennuten (22) vorgespannt sind.

4. Verschlussvorrichtung nach einem der Ansprüche 1 bis 3, '
**dadurch gekennzeichnet,**
**dass** das Verschlusselement (12) kugelsegmentartig ausgebildet ist und auf einer gekrümmt ausgebildeten Oberfläche zwei Kulissennuten (22) aufweist.

5. Verschlussvorrichtung nach Anspruch 4,
**dadurch gekennzeichnet,**
**dass** die Aufnahmevorrichtung (14) eine zur gekrümmt ausgebildeten Oberfläche des Verschlusselements (12) komplementäre Negativform zur Aufnahme des Verschlusselements (12) aufweist.

6. Verschlussvorrichtung nach einem der vorhergehenden Ansprüche,
**dadurch gekennzeichnet,**
**dass** die Kulissennuten (22) eine gekrümmte Form besitzen, insbesondere die Form eines Kreisbogens.

7. Verschlussvorrichtung nach einem der vorhergehenden Ansprüche,
**dadurch gekennzeichnet,**
**dass** die Kulissensteine (16) wenigstens eine Anlaufschräge (30) aufweisen.

8. Verschlussvorrichtung nach einem der Ansprüche 1 bis 7,
**dadurch gekennzeichnet,**
**dass** die Aufnahmevorrichtung (14) einen Ausgießer (26) zum Ausgießen eines durch die Öffnung (15) der Aufnahmevorrichtung (14) durchtretenden Mediums, insbesondere einer Flüssigkeit, umfasst.

9. Gefäß (18) zur Aufnahme eines Mediums, insbesondere einer Flüssigkeit, mit einer mit dem Gefäß (18) verbindbaren oder verbundenen Verschlussvorrichtung (10) nach einem der vorhergehenden Ansprüche.

10. Gefäß nach Anspruch 9,
**dadurch gekennzeichnet,**
**dass** das Gefäß (18) als Thermoskanne ausgebildet ist.

## Claims

1. A closing device (10) for closing a container (18), in particular a container for liquids, comprising
- a closing element (12),
- an accommodating device (14), which comprises an opening (15) and which is equipped to accommodate the closing element (12) for closing the opening (15) in a medium-tight manner,
**characterized by**
a slide guide (17), via which the closing element (12) can be moved, in particular pivoted, relative to the accommodating device (14), wherein slide grooves (22) are arranged at the closing element (12) and corresponding slide blocks (16) are arranged at the accommodating device (14) or vice versa, and wherein the slide blocks (16) are pretensioned in the direction of the corresponding slide grooves (22), so that the closing element (12) can be held in the accommodating device (14) and can be removed therefrom by pushing back the slide blocks (16).

2. The closing device according to claim 1,
**characterized in**
**that** the closing element (12) can be moved between a first position, in which the opening (15) is closed, and a second position, in which the opening (15) is at least partially open.

3. The closing device according to claim 1 or 2,
**characterized in**
**that** the slide blocks (16) are pretensioned in the corresponding slide grooves (22) by means of a spring, in particular by means of a clamping ring (34).

4. The closing device according to one of claims 1 to 3,
**characterized in**
**that** the closing element (12) is embodied in a ball segment-like manner and encompasses two slide grooves (22) on a surface, which is embodied so as to be curved.

5. The closing device according to claim 4,
**characterized in**
**that** the accommodating device (14) encompasses a counterpart, which is complementary to the surface of the closing element (12), which is embodied so as to be curved, for accommodating the closing element (12).

6. The closing device according to one of the preceding claims,
**characterized in**
**that** the slide grooves (22) have a curved shape, in particular the shape of a circular arc.

7. The closing device according to one of the preceding claims,
**characterized in**
**that** the slide blocks (16) encompass at least one leading chamfer (30).

8. The closing device according to one of claims 1 to 7,
**characterized in**
**that** the accommodating device (14) comprises a spout (26) for pouring out a medium, in particular a liquid, which passes through the opening (15) of the accommodating device (14).

9. A container (18) for accommodating a medium, in particular a liquid, comprising a closing device (10) according to one of the preceding claims, which can be connected or which is connected to the container (18).

10. The container according to claim 9,
**characterized in**
**that** the container (18) is embodied as thermos pot.

## Revendications

1. Dispositif de fermeture (10) pour fermer un récipient (18), notamment un contenant de liquide, comprenant
- un élément de fermeture (12)
- un dispositif de réception (14) comprenant une ouverture (15), qui est agencé pour recevoir l'élément de fermeture (12) destiné à fermer l'ouverture (15) de manière étanche au fluide,
**caractérisé par**
un guidage par coulisse (17) par l'intermédiaire duquel l'élément de fermeture (12) peut se déplacer, notamment pivoter par rapport au dispositif de réception (14), sur l'élément de fermeture (12) étant placées des rainures pour coulisse (22) et sur le dispositif de réception (14) étant placés des coulisseaux (16) correspondants ou inversement et les coulisseaux (16) étant précontraints en direction des rainures pour coulisse (22) correspondantes, de sorte que l'élément de fermeture (12) soit maintenu dans le dispositif de réception (14) et puisse être retiré de celui-ci par un refoulement des coulisseaux (16).

2. Dispositif de fermeture selon la revendication 1,
**caractérisé**
**en ce que** l'élément de fermeture (12) est réglable entre une première position, dans laquelle l'ouverture (15) est fermée et une deuxième position, dans laquelle l'ouverture (15) est au moins partiellement ouverte.

3. Dispositif de fermeture selon la revendication 1 ou 2,
**caractérisé**
**en ce que** les coulisseaux (16) sont précontraints dans les rainures pour coulisse (22) correspondantes au moyen d'un ressort, notamment au moyen d'une bague de serrage (34).

4. Dispositif de fermeture selon l'une quelconque des revendications 1 à 3,
**caractérisé**
**en ce que** l'élément de fermeture (12) est conçu à la manière d'un segment sphérique et comporte deux rainures pour coulisse (22) sur une surface conçue en étant courbée.

5. Dispositif de fermeture selon la revendication 4,
**caractérisé**
**en ce que** pour recevoir l'élément de fermeture (12), le dispositif de réception (14) présente une forme négative par rapport à la surface conçue en étant courbée de l'élément de fermeture (12).

6. Dispositif de fermeture selon l'une quelconque des revendications précédentes,
**caractérisé**
**en ce que** les rainures pour coulisse (22) ont une forme courbée, notamment la forme d'un arc de cercle.

7. Dispositif de fermeture selon l'une quelconque des revendications précédentes,
**caractérisé**
**en ce que** les coulisseaux (16) comportent au moins un biseau d'attaque (30).

8. Dispositif de fermeture selon l'une quelconque des revendications 1 à 7,
**caractérisé**
**en ce que** le dispositif de réception (14) comporte un verseur (26) pour déverser le fluide passant à travers l'ouverture (15) du dispositif de réception (14), notamment un liquide.

9. Récipient (18) destiné à recevoir un fluide, notamment un liquide, avec un dispositif de fermeture (10) selon l'une quelconque des revendications précédentes relié ou susceptible d'être relié avec le récipient (18).

10. Récipient selon la revendication 9,
**caractérisé**
**en ce que** le récipient (18) est une bouteille thermos.
